# EUROPÄISCHE PATENTSCHRIFT

(11) **EP 0 890 903 B1**
(45) Veröffentlichungstag und Bekanntmachung des Hinweises auf die Patenterteilung: **06.09.2006**
(21) Anmeldenummer: 98112430.8
(22) Anmeldetag: 04.07.1998
(51) Int. Cl.: G06F 12/06, G06F 9/355

(54) **Programmspeichererweiterung für Mikroprozessoren**
Program memory expansion for microprocessors
Extension de mémoire de programme pour microprocesseurs

(30) Priorität: 10.07.1997 DE 19729543
(43) Veröffentlichungstag der Anmeldung: 13.01.1999
(73) Patentinhaber: Brüel & Kjaer Vibro GmbH, 64293 Darmstadt (DE)
(72) Erfinder: Sonnenschein, Roland, Dr., 64839 Münster (DE); Sieberling, Hans Günther, Dr., 65719 Hofheim (DE)
(74) Vertreter: Behrens, Helmut

(56) Entgegenhaltungen:
- EP-A- 0 232 518
- EP-A- 0 393 281
- GB-A- 2 289 148
- TYSON T J ET AL: "USING THE 54/74LS610-13 MEMORY MAPPING UNITS" MICROPROCESSORS AND MICROSYSTEMS, Bd. 12, Nr. 5, 1. Juni 1988, Seiten 286-291, XP000211918
- AL-RIAHI H: "Software-controlled memory duplication" MICROPROCESSORS AND MICROSYSTEMS, JAN.-FEB. 1985, UK, Bd. 9, Nr. 1, Seiten 21-23, XP000211828 ISSN 0141-9331

## Beschreibung

Die Erfindung betrifft eine Programmspeichererweiterung für Mikroprozessoren sowie ein Verfahren zur Programmspeichererweiterung gemäß dem Oberbegriff der Patentansprüche 1 und 2.

In der Computertechnik sind die Mikroprozessoren über einen Adreß- oder Datenbus mit Speicherelementen verbunden. Dabei kann ein Mikroprozessor, der höchstens mit einem 16 bit Adreßbus beschaltbar ist, auch nur auf 16 bit adressierbare Speicherplätze zugreifen. Insbesondere kommen in der Meßtechnik häufig Anwendungsfälle vor, bei denen die Meßaufgaben durch aufwendige Bedieneroberflächen unterstützt werden sollen. Hierbei sind im Grunde relativ einfache 16 bit Mikroprozessoren ausreichend, an die aber wegen der komfortablen Bedienerführung höher adressierbare Speicherelemente anschließbar sein sollen.

Denkbar wäre deshalb, gleich 32 bit Mikroprozessoren oder noch höherwertige Mikroprozessoren, für deren Realisierung höher adressierbare Speicherelemente anschließbar sein müssen, zu verwenden, um eine entsprechend adressierbare Speichereinheit anschließen zu können. Denkbar wäre aber auch, einen 16 bit Signalprozessor für die Meßwertverarbeitung zu verwenden und daran mit 16 bit adressierbare Speicherelemente anzuschließen und zusätzlich einen separaten Rechner mit großem Programmspeicher für die Bearbeitung der Bedieneroberfläche zu wählen.

Beide denkbaren Alternativen haben insbesondere bei transportablen Meßsystemen den Nachteil, daß sie relativ großen Platzbedarf und große Akku- oder Batteriekapazitäten beanspruchen, so daß die Handlichkeit oder der Bedienkomfort leidet.

Aus der EP-A-0 232 518 ist ein Verfahren und eine Anordnung zum Bilden von Adressen zum Ansteuern eines Arbeitsspeichers bekannt, bei dem ein Mikroprozessor als zentrales Steuerwerk über ein Steuerbus einen Arbeitsspeicher ansteuert. Dabei werden die ansteuerbaren Adressleitungen des Mikroprozessors durch einen zusätzlichen Vergleicher, eine Adresserweiterungseinrichtung und einen Adressregisterspeicher um zusätzliche höherwertige Adressleitungen hardwaremäßig erhöht. Dadurch lässt sich die dem Mikroprozessor zugeordnete Arbeitsspeicherkapazität um ein Vielfaches vergrößern. Allerdings sind dazu mit dem Vergleicher, der Adresserweiterungseinrichtung und dem Adressregisterspeicher mehrere elektronische Schaltkreise erforderlich, die zusätzlichen Bauraum beanspruchen, die Verarbeitungsgeschwindigkeit reduzieren und den Stromverbrauch erhöhen sowie Adressleitungen des Mikroprozessors beanspruchen.

Aus der Druckschrift "T. J. Thyson at al.: Using the 54/74LS610-13 Memory mapping units' microprocessors and microsystems, Bd. 12, Nr. 5, 1. Juni 1988, Seiten 286-291, XP000211918" ist eine Speicherschaltung bekannt, bei der die Adressierkapazität eines Mikroprozessors erweitert wird, der über einen Adressbus mit einem Daten- oder Arbeitsspeicher verbunden ist. Dazu ist neben mindestens einem Adressdekoder noch mindestens ein RAM-Schaltkreis vorgesehen, durch den die ansteuerbare Adressierkapazität des Mikroprozessors erhöht wird. Allerdings werden zur Ansteuerung des RAM-Schaltkreises einige der höherwertigen Adressleitungen des Mikroprozessors benötigt, das sich insbesondere zur Ausführung längerer Programmteile nachteilig auswirken kann. Darüber hinaus enthält diese Speichererweiterung auch mehrere hardwaremäßige Schaltkreise, die zusätzlichen Einbauraum und eine höhere Stromversorgung erfordern, das insbesondere beim Einsatz von Handmessgeräten von Nachteil sein kann.

Der Erfindung liegt deshalb die Aufgabe zugrunde, bei Mikroprozessoren die vorgegebene Adressierbarkeit der anschließbaren Speicherelemente zu vervielfachen.

Diese Aufgabe wird durch die im Patentansprüche 1 und 2 angegebene Erfindung gelöst.

Die Erfindung hat den Vorteil, daß durch eine derartige Vervielfachung der adressierbaren Speicher relativ preiswerte und stromsparende Signalprozessoren verwendet werden können. Dabei ist es besonders vorteilhaft, die Programmspeicherelemente in Seiten zu unterteilen und auf jeder Seite das Umschaltprogramm und die Sprungtabelle abzuspeichern. Dadurch sind auch bei vorgegebenen Signalprozessoren die Speicherelemente nahezu beliebig erweiterbar, ohne daß hierdurch etwas an der Signalprozessoreinheit verändert werden müßte.

Weiterhin ist eine derartige Speichererweiterung sehr betriebssicher, da auf jeder Speicherseite sämtliche Programmschritte der Speichererweiterung abrufbar vorhanden sind. Zusätzlich hat die Erfindung den Vorteil, daß derartige Mikroprozessoren mit relativ großen Speicherelementen sehr kompakt aufbaubar sind und nur eine verhältnismäßig geringe Energieversorgung benötigen. Dies ist insbesondere bei transportablen Meß- und Speichergeräten vorteilhaft, die bei geringen Außenabmessungen und geringem Gewicht sehr komfortable Anwendungsmöglichkeiten bieten können.

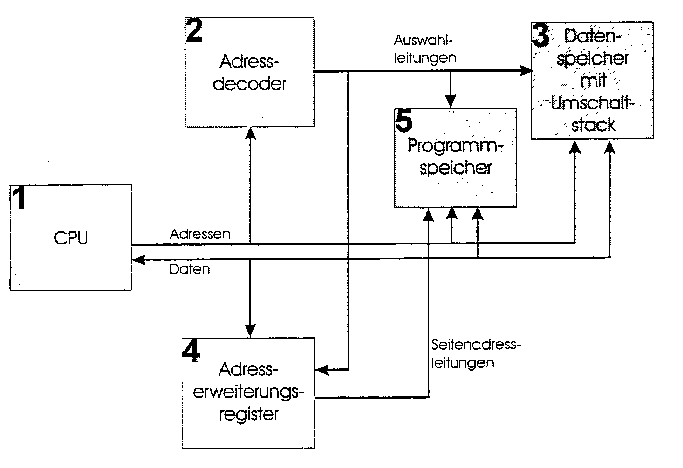

Die Zeichnung zeigt ein Speichererweiterungssystem für ein tragbares Schwingungsmeßgerät mit einem Mikroprozessor (CPU) 1 und einem Programm- 5 und Datenspeicher 3, wobei ein Adreßerweiterungsregister 4 mit einem Adreßdekoder 2 zur Vervielfachung der adressierbaren Speicherelemente 3, 5 vorgesehen ist.

Der Mikroprozessor 1 stellt einen 16 bit Signalprozessor dar, an den ein 16 bit Adreßbus zum Programmspeicher 5 anschließbar ist. Zusätzlich ist ein Adreßerweiterungsregister 4 vorgesehen, durch welches die adressierbaren Programmspeicherplätze verachtfacht werden. Mit einem derartigen System sind auch andere Vervielfachungen möglich, wenn dies vom jeweiligen Programmablauf erfordert wird und entsprechende Adreßerweiterungsregister 4 vorgesehen werden.

Das Adreßerweiterungsregister 4 enthält die jeweiligen Seitenadressen des jeweiligen Programmspeichers 5. Dazu ist ein spezielles Umschaltprogramm vorgesehen, durch welches die jeweiligen Seiten des Programmspeichers 5 aufrufbar sind. Bei einer achtfachen Speichererweiterung sind acht Speicherseiten mit jeweils ca. 16 bit adressierbaren Speicherplätzen vorgesehen. Bei einem Unterprogrammaufruf ermittelt das Umschaltprogramm die jeweilige Adresse mit Seitenangaben, auf der sich das jeweilige Unterprogramm befindet und stellt dazu das Adreßerweiterungsregister 4 entsprechend ein. Weiterhin ermittelt das Umschaltprogramm bei Beendigung des Unterprogrammes die Rücksprungadresse des rufenden Programms und stellt mittels des Adreßerweiterungsregisters 4 die Rücksprungadresse ein, um wieder in das Ursprungsprogramm auf der entsprechenden Speicherseite zurückzukehren. Dazu ist auf jeder Seite des Programmspeichers 5 das Umschaltprogramm und eine spezielle Sprungtabelle gespeichert. Dabei wird die Sprungtabelle vor Inbetriebnahme des Speichererweiterungssystems mit Hilfe spezieller Dienstprogramme erstellt.

Dabei werden die Objektdateien zunächst den einzelnen Vervielfachungen des ursprünglichen Adreßraumes, den sogenannten Seiten, zugeordnet. Durch Veränderungen der Eintragungen in den Symboltabellen, die Objektdateien, werden die Namen der Symbole verändert. Im beigefügten Beispiel wurde etwa FAufnehmerAn in fAufnehmerAn abgeändert. Die unveränderten Symbole werden dann in einer zusätzlichen Symboltabelle und einer sogenannten Sprungtabelle gesammelt. Letztere wird dann auf jeder Programmseite des Programmspeichers 4 gespeichert. Damit sind alle ursprünglichen Bezugnahmen aufgebrochen und werden erst wieder beim Ablauf des Gesamtprogramms wiederhergestellt.

Der Einsprung in ein Unterprogramm wird von dem auf jeder Speicherseite befindlichen Umschaltprogramm vermittelt, indem aus der Rücksprungadresse der entsprechende Verweis auf die zusätzliche Symboltabelle mit den dort enthaltenen Adressen und Seitennummern errechnet wird. Auf dem Umschaltstack (Umschaltstapelspeicher) wird die Rücksprungadresse im rufenden Programm sowie dessen Speicherseite vermerkt, um später die Rückkehr zu ermöglichen. Die entsprechenden Anweisungen des Umschaltprogramms und der Sprungtabelle sind aus dem anliegenden Umschaltprogramm und der Sprungtabelle ersichtlich, welche einem Programm für DSP5600X-Signalprozessoren der Firma Motorola entnommen wurden.

Besonders zeitkritische Programmteile und Interruptserviceroutinen können aus der Auswahl der Programmspeicher durch Umschalten herausgenommen werden, indem man sie auf jeder Seite bei gleichem Adreßoffset wiederholt.

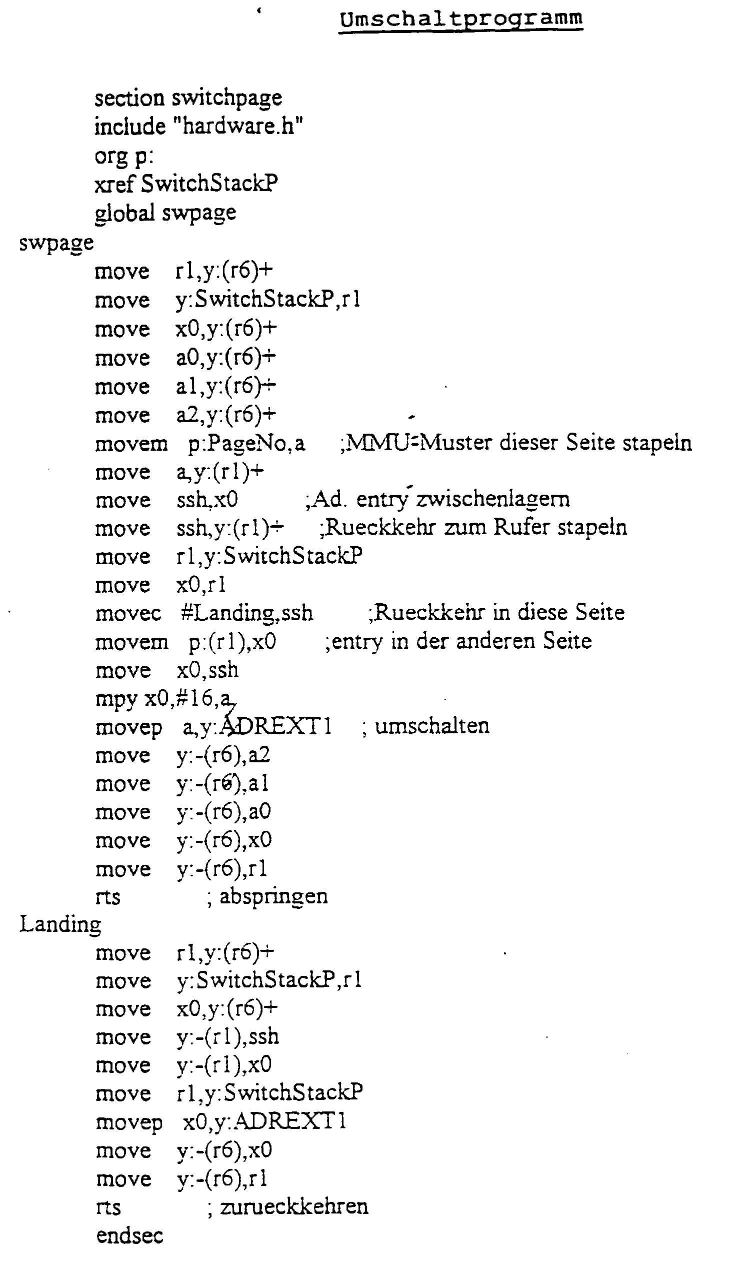

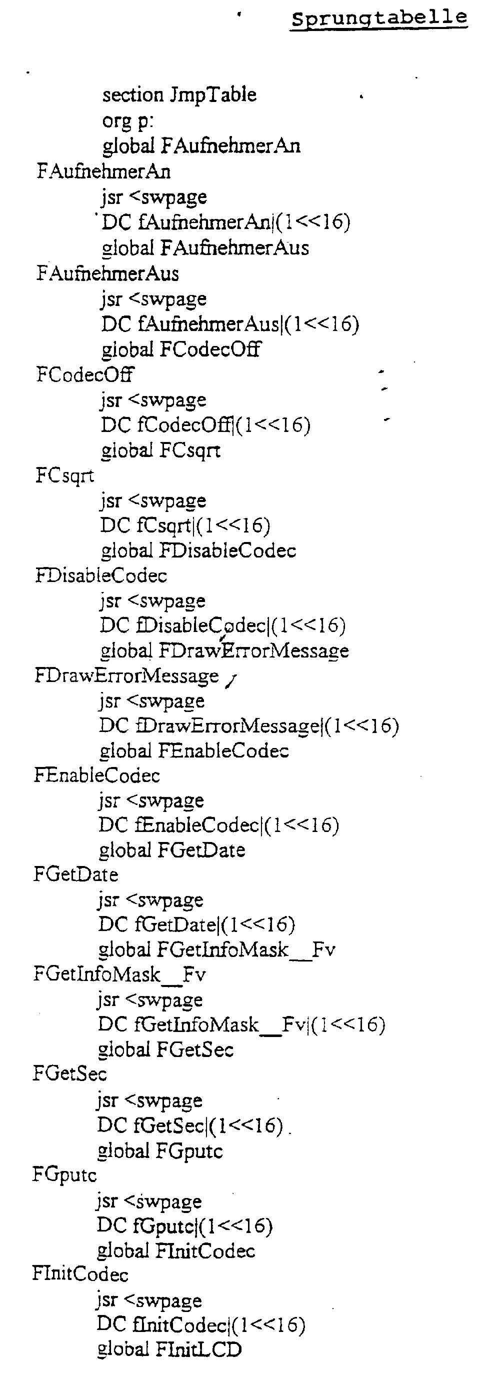

## Patentansprüche

1. Programmspeichererweiterung für Mikroprozessoren (1), die über einen Adress- und Datenbus mit Speicherelementen (5, 3) verbunden sind, wobei ein Adresserweiterungsregister (4) vorgesehen ist, das zusätzliche Adressleitungen zu den Speicherelementen (3, 5) zur Verfügung stellt, **dadurch gekennzeichnet, dass** das Adresserweiterungsregister (4) Seitenadressen der Speicherelemente (5) enthält, die mittels eines Umschaltprogramms einstellbar sind, und dass ein im Datenspeicher (3) enthaltener Umschaltstack (Umschaltstapelspeicher) Rücksprungadressen enthält, die bei Beendigung eines Programmteils mittels des Umschaltprogramms einstellbar sind, und dass als Speicherelement mindestens ein Programmspeicher (5) vorgesehen ist, dessen Speicherkapazität nach Seiten unterteilt ist, wobei jede Seite etwa die Adressierbarkeit des Mikroprozessors (1) umfasst und jede Seite des Programmspeichers (5) auch das Umschaltprogramm und eine Sprungtabelle enthält.

2. Verfahren zur Programmspeichererweiterung mittels einer Vorrichtung nach Anspruch 1, **dadurch gekennzeichnet, dass** durch das Umschaltprogramm und mittels dem Adresserweiterungsregister (4) die Seiten und die Speicheradressen dieser Seite des Programmspeichers (5) aufrufbar sind und dass mittels einer auf jeder Seite des Programmspeichers (5) abgespeicherten Sprungtabelle nach Abarbeitung eines selbständigen Programmteils ein Rücksprungbefehl auf eine im Umschaltstack (3) abgelegte Rücksprungadresse erfolgt, durch die auf eine vorgegebene Seite und Speicheradresse des Ursprungsprogramms zurückgekehrt wird.

## Claims

1. Program memory expansion for microprocessors (1), which are connected to memory elements (5, 3) via an address and data bus, wherein an address extension register (4) is provided, which makes additional address lines available to the memory elements (3, 5), **characterised in that** the address extension register (4) contains page addresses of the memory elements (5), which are selectable by means of a switchover program, and that a switchover stack (switchover stack memory) contained in the data memory (3) contains return addresses, which are settable at the completion of a program part by means of the switchover program, and that at least one program memory (5) is provided as memory element, its memory capacity being divided into pages, wherein each page approximately covers the addressability of the microprocessor (1) and each page of the program memory (5) also contains the switchover program and a branch table.

2. Method for program memory expansion by means of a device according to Claim 1, **characterised in that** the pages and the memory addresses of this page of the program memory (5) can be addressed through the switchover program and by means of the address extension register (4), and that a return command for a return address filed in the switchover stack (3) is performed by means of a branch table stored on each page of the program memory (5) after processing an independent program part, through which commands a given page and memory address of the original program is returned to.

## Revendications

1. Extension de mémoire de programme pour microprocesseurs (1) qui sont reliés à des éléments de mémoire (5, 3) par un bus d'adresses et de données, dans laquelle il est prévu un registre d'extension d'adresses (4) qui fournit des liaisons d'adresses supplémentaires avec les éléments de mémoire (3, 5), **caractérisée en ce que** le registre d'extension d'adresses (4) contient des adresses de pages des éléments de mémoire (5) qui peuvent être réglées à l'aide d'un programme de commutation et **en ce qu'**une pile de commutation (mémoire de pile de commutation) contenue dans la mémoire de données (3) contient des adresses de retour qui, à la fin d'une partie de programme, peuvent être réglées à l'aide d'un programme de commutation et **en ce qu'**il est prévu au moins une mémoire de programme (5) comme élément de mémoire dont la capacité de mémoire est divisée en pages, chaque page comprenant à peu près la capacité d'adressage du microprocesseur (1) et chaque page de la mémoire de programme (5) contenant également le programme de commutation et une table de renvoi.

2. Procédé destiné à l'extension de mémoire de programme à l'aide d'un dispositif selon la revendication 1, **caractérisé en ce que** les pages et les adresses de mémoire de cette page de la mémoire de programme (5) peuvent être appelées par le programme de commutation et à l'aide du registre d'extension d'adresses (4) et **en ce qu'**une instruction de retour pour une adresse de retour déposée dans la pile de commutation (3), par l'intermédiaire de laquelle on revient vers une page prédéterminée et une adresse de mémoire du programme source, est exécutée à l'aide d'une table de renvoi mémorisée de chaque page de la mémoire de programme (5) après le traitement d'une partie de programme autonome.
